# DEMANDE DE BREVET EUROPEEN

(11) **EP 2 617 610 A1**
(43) Date de publication de la demande: **24.07.2013**
(21) Numéro de dépôt: 13150820.2
(22) Date de dépôt: 10.01.2013
(51) Int. Cl.: B60S 1/16, H02K 7/116, F16H 57/039, H02K 5/10, F16H 57/027

(54) **Dispositif de protection d'une membrane respirante, groupe motoréducteur et système d'essuyage muni d'un tel dispositif**

(30) Priorité: 18.01.2012 FR 1250484
(71) Demandeur: Valeo Systèmes d'Essuyage, 78321 Le Mesnil Saint Denis (FR)
(72) Inventeur: Valliere, Jérôme, 86220 Les Ormes (FR)
(74) Mandataire: Callu Danseux, Violaine

(57) **Abrégé**

L'invention concerne un dispositif (1) de protection d'une membrane respirante (2) permettant la ventilation d'un organe, notamment motoréducteur d'un système d'essuyage, ledit dispositif comprenant un support (3), destiné à accueillir ladite membrane (2) à la surface dudit organe et un couvercle (4) permettant de protéger ladite membrane (2), ledit dispositif (1) étant configuré pour autoriser une circulation d'air entre l'intérieur et l'extérieur de l'organe à travers ladite membrane (2).

Selon l'invention, ledit couvercle (4), prévu issu de moulage dudit support (3), est articulé par rapport audit support (3) de façon à permettre la fixation de ladite membrane (2) sur ledit support (3), dans une position ouverte dudit couvercle (4), et à recouvrir ladite membrane (2), dans une position fermée dudit couvercle (4).

## Description

Le domaine de la présente invention est celui de l'automobile et, plus particulièrement, celui des équipements pour l'essuyage du pare-brise des automobiles.

Les automobiles sont couramment équipées de systèmes d'essuyage comprenant des essuie-glaces pour assurer un lavage du pare-brise et permettre de dégager la vision que le conducteur a de son environnement. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur.

Le mouvement des balais est généré par un moteur électrique, lié à un réducteur. Ces pièces sont positionnées au voisinage des balais qu'ils entraînent, c'est à dire dans une zone soumise aux intempéries.

Pour éviter la condensation à l'intérieur du réducteur, il est connu de munir ce dernier d'une membrane respirante, c'est-à-dire, d'une membrane étanche au liquide et perméable à l'air. Une telle membrane doit être à l'abri des agressions extérieures et il a déjà été proposé de la disposer sous un couvercle qui la protège tout en laissant circuler l'air de part et d'autre de la membrane.

Cependant, dans les solutions connues, la membrane est disposée sur un support et le couvercle qui abrite la membrane est une pièce indépendante qui doit être rapporté et fixé sur le support. Ceci peut poser des difficultés.

La présente invention a pour but de remédier à ces inconvénients en proposant un dispositif de protection d'une membrane respirante permettant la ventilation d'un organe, notamment motoréducteur d'un système d'essuyage, ledit dispositif comprenant un support, destiné à accueillir ladite membrane à la surface dudit organe et un couvercle permettant de protéger ladite membrane, ledit dispositif étant configuré pour autoriser une circulation d'air entre l'intérieur et l'extérieur de l'organe à travers ladite membrane.

Selon l'invention, ledit couvercle est issu de moulage dudit support. Il est en outre articulé par rapport audit support de façon à permettre la fixation de ladite membrane sur ledit support, dans une position ouverte dudit couvercle, et à recouvrir ladite membrane, dans une position fermée dudit couvercle.

On dispose ainsi d'un couvercle lié au support, au moins le temps de la fabrication, ceci tout en permettant la mise en place de la membrane sur l'organe qui doit en être équipé.

Selon différents modes de réalisation de l'invention, qui pourront être pris ensemble ou séparément :
- ledit dispositif comprend une charnière d'articulation entre ledit support et ledit couvercle,
- ladite charnière est sécable,
- ledit support comprend une surface de fixation de ladite membrane et ladite charnière est située dans un plan différent de celui de ladite surface de fixation de la membrane,
- ledit couvercle est apte à être encliqueté sur ledit organe,
- ledit couvercle est fixé sur ledit support.

L'invention concerne aussi un groupe motoréducteur muni d'une membrane respirante et d'un dispositif de protection de ladite membrane tel que décrit plus haut.

Ledit groupe comprend, par exemple, un boîtier accueillant un mécanisme de réduction, ledit dispositif de protection étant issu de matière dudit boîtier.

L'invention concerne encore un système d'essuyage muni d'un tel groupe.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemples purement illustratifs et non limitatifs, en référence aux dessins schématiques annexés.

Sur ces dessins :
- la figure 1 est une vue générale en perspective d'un système d'essuyage;
- la figure 2 est une vue, en perspective, d'un exemple de réalisation du dispositif de protection conforme à l'invention, ledit dispositif étant situé au niveau d'un couvercle de réducteur du système d'essuyage de la figure 1, la membrane respirante destinée à être protégée par ledit dispositif n'étant pas encore en place;
- la figure 3 est une vue, en perspective, du dispositif de la figure 2, dans une configuration où il permet la mise en place de la membrane;
- la figure 4 est une vue, en perspective, du dispositif de la figure 2, dans une configuration où il protège ladite membrane.

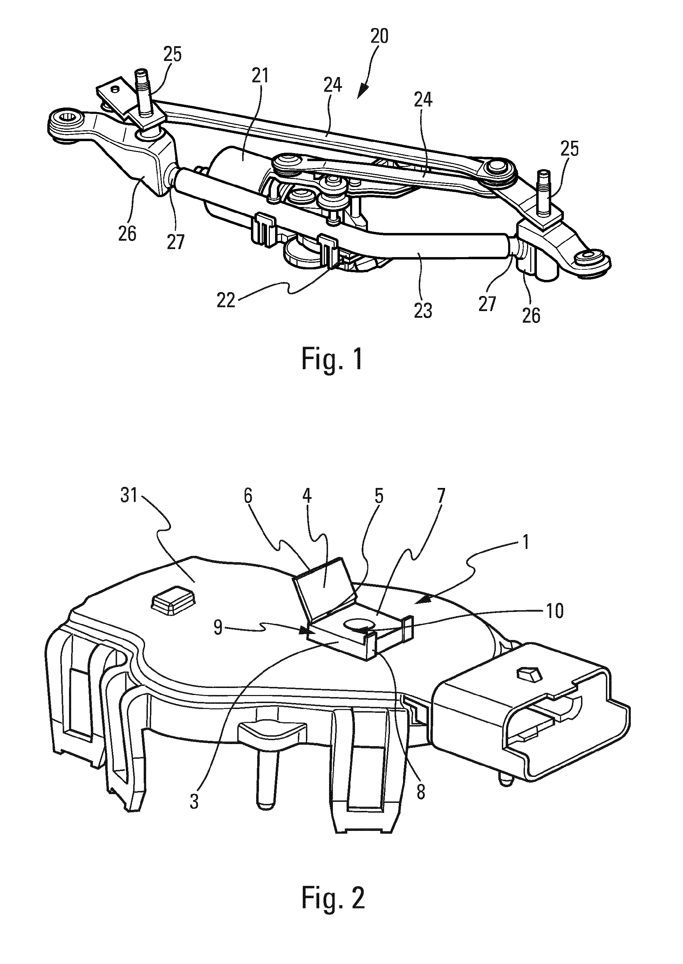

En se référant à la figure 1, on voit un exemple de système d'essuyage d'un véhicule auquel l'invention pourra s'appliquer. Il comprend un groupe motoréducteur d'entraînement 20. Ledit groupe 20 est ici porté par une traverse tubulaire 23. Il comprend un moteur 21 lié à un réducteur 22 qui actionne les bras de deux essuie-glaces, non représentés, grâce à des bielles 24 qui forcent le pivotement de ces bras autour de deux pivots 25. Ces pivots sont portés chacun par un support de pivot 26 qui est fixé sur le châssis du véhicule. Les deux supports de pivot sont reliés l'un à l'autre par la traverse tubulaire 23 qui est creuse et qui coopère à chacune de ses extrémités avec un pion 27, s'étendant à partir du support de pivot correspondant.

Comme illustré aux figures 2 à 4, l'invention concerne plus particulièrement un dispositif 1 de protection d'une membrane respirante 2 permettant la ventilation d'un organe, notamment un couvercle 31 du réducteur du système d'essuyage.

Ladite membrane 2 permet à l'air de passer de l'intérieur de l'organe à l'extérieur de celui-ci, ce qui permet de limiter les risques de condensation dans le réducteur 22, voire dans le moteur 21. Il est en effet désirable d'éviter un tel phénomène pour le bon fonctionnement et la durée de vie du système d'essuyage. La membrane 2 est de plus imperméable au liquide pour empêcher toute intrusion d'eau à l'intérieur de l'organe. Une telle membrane pourra être constituée, par exemple, du matériau connu sous le nom de goretex® ou de tout autre matériau équivalent.

Ledit dispositif 1 de protection comprend un support 3, destiné à accueillir ladite membrane 2 à la surface dudit organe et un couvercle 4 permettant de protéger ladite membrane 2. Ledit couvercle 4 présente ainsi une face, non visible, située en vis-à-vis de la membrane 2 et une face opposée 10. Ledit support 3 et/ou ledit couvercle 4 sont, notamment, en matériau thermo plastique.

Ledit dispositif 1 est configuré pour autoriser une circulation d'air entre l'intérieur et l'extérieur de l'organe à travers ladite membrane 2 afin de pouvoir assurer les échanges gazeux désirés. Ledit support 3 et ledit couvercle 4 sont ainsi disposés l'un par rapport à l'autre pour permettre une telle circulation.

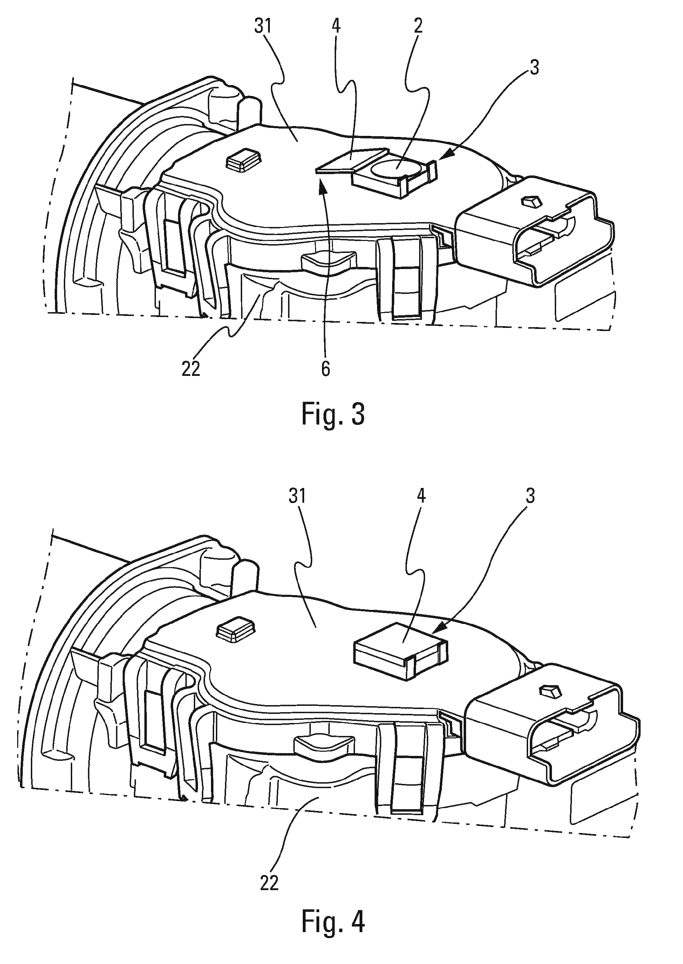

Selon l'invention, ledit couvercle 4 est issu de moulage dudit support 3. Il est en outre articulé par rapport audit support 3 de façon à permettre la fixation de ladite membrane 2 sur ledit support 3, dans une position ouverte dudit couvercle 4, illustré aux figures 2 et 3, et à recouvrir ladite membrane 2, dans une position fermée dudit couvercle 4, illustré à la figure 4.

Autrement dit, le support 3 et le couvercle 4 sont issus de la même étape de moulage de matière. De plus, le couvercle 4 pourra être soit ouvert, comme aux figures 2 et 3, soit fermé comme à la figure 4.

Dans la configuration des figures 2 et 3, on peut ainsi mettre en place la membrane 2 sur le support 3. On pourra à ce sujet remarquer que la membrane 2 n'est pas encore en place à la figure 2 alors qu'elle a été disposée sur le support 3 à la figure 3. Plus précisément dans la configuration de la figure 2, le couvercle 4 est partiellement ouvert tandis que dans la configuration de la figure 3, il est dans une position de pleine ouverture, en contact avec l'organe équipé de ladite membrane 2, ici le couvercle 31 du motoréducteur 20. Dans la configuration de la figure 4, ladite membrane 2, non visible, est protégée par ledit couvercle 4.

On dispose de la sorte d'un couvercle 4 de protection de la membrane 2 qui présente l'avantage d'être imperdable tout en ne faisant pas obstacle à l'installation de la membrane 2 sur l'organe qu'elle doit équiper.

Ledit dispositif pourra comprendre une charnière 5 d'articulation entre ledit support 3 et ledit couvercle 5. Ladite charnière 5 est constituée, notamment par un amincissement de matière. Autrement dit, l'épaisseur de matière de la charnière 5 est inférieure à l'épaisseur de matière du couvercle 4 de façon à permettre son articulation par rapport au support 3.

Selon un premier aspect de l'invention, illustré à la figure 3, ledit couvercle 4 est apte à être encliqueté sur l'organe destiné à être équipé de ladite membrane 2. Il dispose ici pour cela d'une arrête distale 6 apte à être encliqueté sur ledit organe. Le couvercle 4 peut ainsi être maintenu sur ledit organe, soit lors de la mise en place de la membrane 2, soit en fonctionnement si la membrane 2 n'a finalement pas besoin d'être protégée. On dispose de la sorte d'une solution permettant de se servir du couvercle 4 à volonté tout en évitant de le perdre puisqu'il reste accroché au dispositif dans toutes les configurations.

Selon un autre aspect de l'invention, alternatif ou cumulatif à l'aspect précédent, ladite charnière 5 est sécable. On peut de la sorte décider, soit d'arracher ledit couvercle 4 s'il n'est finalement pas nécessaire, soit de le maintenir solidaire dudit support 3.

Ledit support comprend ici une surface de fixation 7 de ladite membrane 2 et ladite charnière 5 est située dans un plan différent de celui de ladite surface de fixation 7 de la membrane 2. On assure de la sorte la présence d'un jeu suffisant entre la membrane 2 et le couvercle 4 pour la circulation de l'air à travers ladite membrane 2.

Dans la configuration de la figure 4, ledit couvercle 4 est, par exemple, fixé, notamment par encliquetage, sur ledit support 3. Pour cela, ledit support 3 présente ici des ergots 8 de fixation, aptes à coopérer avec l'arête distale 6 du couvercle 4.

Ledit support 3 comprend, par exemple, un puits 9 muni de ladite surface 7 de fixation de ladite membrane 2. Ledit puits 9 présente ici une forme extérieure sensiblement parallélépipédique et un orifice de passage 10, circulaire, destiné à être coiffé par ladite membrane 2.

Le couvercle 4 est sensiblement de forme rectangulaire, plane, de même extension que la surface 7 de support de la membrane 2. La charnière 5 est située le long de bords en vis-à-vis dudit support 3 et du couvercle 4. Le bord distale 6 du couvercle 4 est situé sur le bord opposé de ce dernier. Le ou les ergots de fixation 8 sont situés sur le bord opposé du support 3.

Ledit dispositif de protection 1 est situé, par exemple, au niveau du groupe moto réducteur 20, en particulier au niveau d'un boîtier du réducteur 22 dudit groupe. Ledit boîtier accueille un mécanisme de réduction, lié à un arbre d'entrainement du moteur 21, non-visibles. Ledit support 3 dudit dispositif de protection 1 pourra être issu de matière dudit boîtier. Plus particulièrement, ledit boîtier comprend un corps fermé par le couvercle 31, ledit dispositif de protection 1 étant issu de matière dudit couvercle 31.

## Revendications

1. Dispositif (1) de protection d'une membrane respirante (2) permettant la ventilation d'un organe, notamment motoréducteur d'un système d'essuyage, ledit dispositif comprenant un support (3), destiné à accueillir ladite membrane (2) à la surface dudit organe et un couvercle (4) permettant de protéger ladite membrane (2), ledit dispositif (1) étant configuré pour autoriser une circulation d'air entre l'intérieur et l'extérieur de l'organe à travers ladite membrane (2), **caractérisé en ce que** ledit couvercle (4), prévu issu de moulage dudit support (3), est articulé par rapport audit support (3) de façon à permettre la fixation de ladite membrane (2) sur ledit support (3), dans une position ouverte dudit couvercle (4), et à recouvrir ladite membrane (2), dans une position fermée dudit couvercle (4).

2. Dispositif selon la revendication 1 comprenant une charnière (5) d'articulation entre ledit support (3) et ledit couvercle (4).

3. Dispositif selon la revendication 2 dans lequel ladite charnière (5) est sécable.

4. Dispositif selon l'une quelconque des revendications 2 ou 3 dans lequel ledit support (3) comprend une surface de fixation (7) de ladite membrane (2) et ladite charnière (5) est située dans un plan différent de celui de ladite surface de fixation (17) de la membrane (2).

5. Dispositif selon l'une quelconque des revendications précédentes dans lequel ledit couvercle (4) est apte à être encliqueté sur ledit organe.

6. Dispositif selon l'une quelconque des revendications précédentes dans lequel ledit couvercle (4) est fixé sur ledit support (3).

7. Dispositif selon la revendication 7 dans lequel ledit couvercle (3) est encliqueté sur ledit support (3).

8. Groupe motoréducteur (20) muni d'une membrane respirante (2) et d'un dispositif (1) de protection de ladite membrane (2) selon l'une quelconque des revendications précédentes.

9. Groupe selon la revendication 8 comprenant un boîtier accueillant un mécanisme de réduction, ledit dispositif de protection étant issu de matière dudit boîtier.

10. Système d'essuyage muni d'un groupe selon l'une quelconque des revendications 8 ou 9.
